# EUROPEAN PATENT SPECIFICATION

(11) **EP 2 888 094 B1**
(45) Date of publication and mention of the grant of the patent: **12.06.2019**
(21) Application number: 13745019.3
(22) Date of filing: 25.07.2013
(51) Int. Cl.: B33Y 80/00, B29C 64/153

(54) **GAS TURBINE BURNER PART AND METHOD TO MANUFACTURE**
BRENNERTEIL FÜR EINE GASTURBINE UND HERSTELLUNGSVERFAHREN
ÉLÉMENT DE BRÛLEUR DE TURBINE À GAZ ET PROCÉDÉ DE FABRICATION

(30) Priority: 28.09.2012 EP 12186580
(43) Date of publication of application: 01.07.2015
(73) Proprietor: Siemens Aktiengesellschaft, 80333 München (DE)
(72) Inventor: ANDERSSON, Olov, S-60385 Norrkoping (SE); ERIKSSON, Jonas, S-61294 Finspong (SE); GRAICHEN, Andreas, S-60214 Norrköping (SE)
(86) International application number: PCT/EP2013/065696
(87) International publication number: WO 2014/048607

(56) References cited:
- EP-A1- 1 295 846
- DE-C1- 4 400 315
- US-A1- 2007 275 210

## Description

The invention relates to gas turbine burner part comprising a first portion and a second portion, wherein an interface defines said first portion from said second portion and a channel extends from said first portion through said interface into said second portion.

Further the invention relates to a method to manufacture said gas turbine burner part.

Additive manufacturing or 3D printing is a process of making three dimensional solid objects with a high degree of freedom of the design according to a 3D virtual module. Basically the object is created by providing layers of material to a substrate or a platform whereby the final object can have a layered material structure. The object can be made by additive manufacturing in total without being one piece of material with the substrate.

Today several additive technologies are known, for example selective laser sintering, direct metal laser sintering, fused deposition modeling, stereo lithography, digital light processing, fused filament fabrication, melted and extrusion modeling, laminated object manufacturing, electron beam melting, selective heat sintering or powder bed and ink head 3D printing.

From DE 44 00 315 C1 it is known to lithographically add layers of material to a part to build a micro-structure. A high degree of accuracy is needed to avoid any significant offset in channels extending from a substrate into the added material.

From US 2007/0275210 A1 it is known to layerwise generate a honeycomb seal.

From EP 1295846 a multilayered microdevice structure comprising channels is known.

This invention concentrates on additive technologies which enables the generated composite part to be used in a gas turbine burner. The most interesting technologies are therefore selective laser sintering, direct metal laser sintering or fused deposition modeling. Since these additive technologies are comparatively young developments, design adjustments have not been performed so far to optimal exploit the advantages of these technologies as it is done for conventionally produced parts. Conventional production here means mature technology for example casting, milling or turning.

Especially advantageous is additive manufacturing in the field of service and refurbishment for example of burner heads of gas turbines. If a burner head of a gas turbine made to inject fuel and maybe oxygen containing gas into a combustion chamber is worn out by for example erosion, it is conventionally completely replaced. By using additive manufacturing a part of this burner head can be cut off and the remaining part can be used as a substrate for additive manufacturing, for example selective laser melting. Here it is, however, very difficult to adjust the position of the used part accurately to guarantee that tiny channels in the first existing part are placed correctly to be continued by the second part to be generated by the additive manufacturing onto the substrate. Normally the aim is to exactly continue these channels extending through the old piece of material into the new piece of material across the interface between these two parts without any position shift restricting the average diameter of said channel at the interface. It is therefore up to now not an interesting option to rework such parts as described above since an offset can merely be avoided.

It is one object of the invention to improve the design of a part of the incipiently mentioned type such that refurbishment by additive manufacturing can be done without significant quality restriction in the resulting part. It is another object of the invention to provide a method of performing additive manufacturing on an existing first part of the incipiently mentioned type resulting in a final product without significant quality restriction.

The invention solves the above objects by a gas turbine burner part of the incipiently defined type with the additional properties of claim 1. Further the invention proposes a method according to claim 4 to overcome the above problems. The respectively dependent claims relate to preferred embodiments of the invention.

It is essential, that the gas turbine burner part of said first part and said second part is finally one piece of material.

Said first portion can be made by any production method, for example conventionally machining as milling, turning or casting. Channels in this first part can also be provided by any manufacturing method, especially by drilling or electro dynamic machining. Said first part can be done also by additive manufacturing.

Said second part is provided by additive manufacturing as defined above. It is essential that the first part solves as a substrate for the second part in the area of said interface. The invention overcomes the problem that every manufacturing process is limited in accuracy and especially in the area of refurbishing a part during the above described cutting and adding material method. Conventionally additive manufacturing adds up inaccuracies to a magnitude which is not too tolerable regarding tiny geometries as channels continuously extending through said first part and said second part. Considering the tininess of these channels it is possible that channels do not even meet due to the limits of accuracy of the respective production methods.

The invention makes the above defined production processes more capable to deal with tingly geometries without spending extensive effort into increasing accuracy. The invention makes the design itself more tolerable for inaccurate manufacturing and safes thereby time and costs. Further the invention simply enables some designs to be done as a gas turbine burner part as defined above which were due to accuracy problems not possible before.

One preferred embodiment provides said channel having a first section at said interface and a second section at a specific distance remote from said first element, wherein an average third diameter of said channel at said second section is nominally the same as said first diameter. This design feature enables the best approximation of the channel geometry generated by additive manufacturing to a part which was made of one piece and by one single manufacturing process. If the channel ends in said second part into a nozzle remote from said interface, this nozzle will be nearly not influenced by any offset of the channel in the area of the interface with regard to fluid dynamic properties of said channel. Preferably the cross-section of said channel is shaped round but can be of any geometry.

The average diameter referred to in this document is the diameter of a circle surrounding an area identical to a cross section of said channel.

The preferred application of the invention is a method to refurbish parts by first machining away or cutting off a portion to be replaced, and replacing it by said second portion.

According to the invention this method of rework is preferably applied to gas turbine parts, especially to gas turbine burner parts.

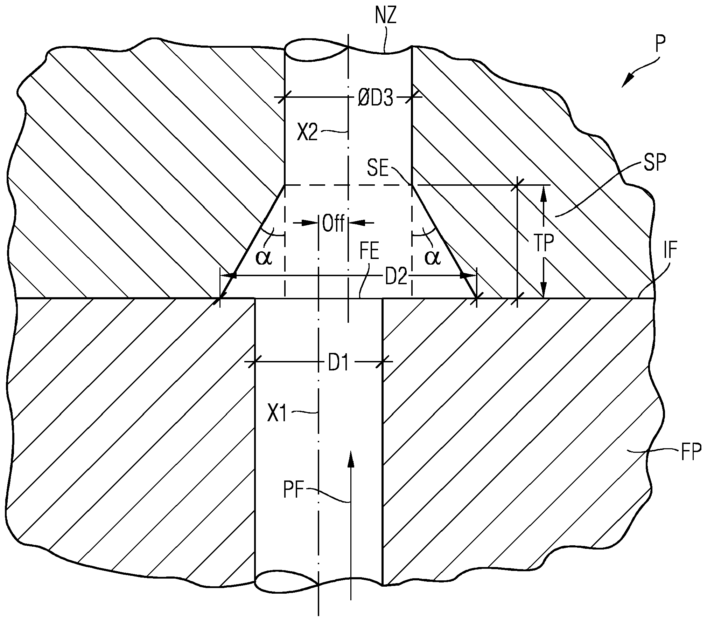

The above mentioned attributes and other features and advantages of this invention and a manner of attaining them will become more apparent and the invention itself will be better understood by reference to the following description of the currently best mode of carrying out the invention taken in conjunction with the accompanying drawings, wherein
Figure 1 shows a schematic depicting of a gas turbine burner part according to the invention made by a method according to the invention.

Figure 1 shows a schematic depiction of a gas turbine burner part P according to the invention comprising a first portion FP and a second portion SP meeting each other at an interface IF defining said first portion FP from said second portion SP. A channel CH extending from said first portion FP through said interface IF into said second portion SP. Said channel CH in said first portion FP extends along a central first axis X1 and in said second portion SP said channel extends along a second axis X2. Said first axis X1 and said second axis X2 are nominally meant to be identical but are offset from each other by an offset OFF duet to manufacturing or alignment inaccuracies. Said second portion SP is build up on said interface IF of said first portion FP by additive manufacturing. In this example said SP was build up by laser sintering.

Said channel CH in said first portion FP has a first diameter D1 especially in the area of said interface IF. Said channel CH in said second portion SP in the area of said interface IF has a second diameter D2, which is larger than D1. With increasing distance to said interface IF said channel CH in said second portion SP is tapered along o first taper portion TP till said channel diameter reaches a third diameter D3. Said third diameter D3 here is identical with said first diameter D1. Diameter here means that the design has a nominal identical average diameter, which can deviate according to manufacturing accuracy. In this example of figure 1 the tapering is conical with a conus-angle of α. However the tapering can have any geometry including a tulip shape aimed to reduce turbulence if said channel CH conducts a process fluid PF especially into the direction from said first part FP to said second part SP. Preferably said channel is designed to conduct a process fluid PF in the direction from said first portion FP to said second portion SP with reduced pressure loss. Preferably said channel CH extends all the way through said second part SP, wherein said channel CH might join into a nozzle NZ.

According to the method of the invention to manufacture the gas turbine burner part P in a first step said first part FP is provided and said channel CH extends along a first central axis X1 through said first part FP.

In a second step material is added by additive manufacturing to said interface IF in order to build up said second portion SP. Said channel CH in said second portion SP is than provided with the above described geometry.

Preferably said offset OFF between said first axis X1 and said second axis X2 is less than (D2 - D1) preferably (D2-D1)/2.

## Claims

1. Gas turbine burner part (P) comprising
- a first portion (FP),
- a second portion (SP),
- an interface (IF) defining said first portion (FP) from said second portion (SP),
- a channel (CH) extending from said first portion (FP) through said interface (IF) into said second portion (SP), wherein said second portion (SP) is made by additive manufacturing technology on top of said interface (IF) of said first portion (FP),
wherein said channel (CH) has a first average diameter (D1) in said first portion (FP) and said interface (IF),
wherein said channel (CH) has a second average diameter (D2) in said second portion (SP) at said interface (IF),
wherein said second diameter (D2) is larger than said fist diameter (Dl),
wherein said channel (CH) is becoming narrower along a first tapered portion (TP) in said second portion (SP) with increasing distance from said interface (IF), wherein said channel (CH) extends along a first central axis (X1) at least in the proximity to said interface (IF) in said first portion,
wherein said channel extends along a second central axis (X2) at least in the proximity to said interface (IF) in said second portion (SP),
wherein said first axis is parallel to said second axis.

2. Gas turbine burner part (P) according to claim 1, wherein said tapered portion (TP) has a first end (FE) at said interface (IF) and a second section(SE) opposite said first end (FE), wherein an average third diameter (D3) of said channel (CH) at said second section(SE) is nominally the same as said first diameter (D1).

3. Gas turbine burner part (P) according to claim 1 or 2, wherein said channel (CH) has a round, oval or elliptic cross section.

4. Method to produce a Gas turbine burner part (P) preferably according to one of claims 1 to 3,
comprising
- a first portion (FP),
- a second portion (SP),
- an interface (IF) defining said first portion (FP) from said second portion (SP),
- a channel (CH) extending from said first portion (FP) through said interface (IF) into said second portion (SP), the method comprising the following steps
1. providing said first portion (FP), wherein said channel (CH) extends along a first central axis (X1) through said first portion (FP),
2. adding material by additive manufacturing to said interface (IF) in order to build up said second portion (SP),
wherein said channel (CH) has a first average diameter (D1) in said first portion (FP) at said interface (IF),
wherein said channel (CH) has a second average diameter (D2) in said second portion (SP) at said interface (IF),
wherein said second diameter (D2) is larger than said fist diameter (D1),
wherein said channel (CH) along a first tapered portion (TP) is becoming narrower in said second portion (SP) with increasing distance from said interface (IF),
wherein said channel extends along a second central axis (X2) at least in the proximity to said interface (IF) in said second portion (SP),
wherein said first axis is parallel to said second axis.

5. Method according to claim 4,
wherein said channel (CH) in said second portion (SP) has a second central axis (X2) through said first portion (FP), wherein said second central axis (X2) has an offset (OFF) to said first central axis (X1) and said offset (OFF) is smaller than (D2 - D1).

## Patentansprüche

1. Gastubinenbrennerteil (P), das Folgendes aufweist
- einen ersten Abschnitt (FP),
- einen zweiten Abschnitt (SP),
- eine Anschlussstelle (IF), die den ersten Abschnitt (FP) von dem zweiten Abschnitt (SP) abgrenzt,
- einen Kanal (CH), der sich von dem ersten Abschnitt (FP) durch die Anschlussstelle (IF) in den zweiten Abschnitt (SP) erstreckt,
wobei der zweite Abschnitt (SP) durch additive Fertigungstechnologie auf der Oberseite der Anschlussstelle (IF) des ersten Abschnitts (FP) hergestellt ist,
wobei der Kanal (CH) einen ersten mittleren Durchmesser (D1) in dem ersten Abschnitt (FP) und der Anschlussstelle (IF) aufweist,
wobei der Kanal (CH) einen zweiten mittleren Durchmesser (D2) in dem zweiten Abschnitt (SP) an der Anschlussstelle (IF) aufweist,
wobei der zweite Durchmesser (D2) größer als der erste Durchmesser (D1) ist,
wobei der Kanal (CH) entlang eines ersten sich verjüngenden Abschnitts (TP) in dem zweiten Abschnitt (SP) mit steigendem Abstand von der Anschlussstelle (IF) schmaler wird,
wobei sich der Kanal (CH) entlang einer ersten mittleren Achse (X1) zumindest in der Nähe zu der Anschlussstelle (IF) in dem ersten Abschnitt erstreckt,
wobei sich der Kanal entlang einer zweiten mittleren Achse (X2) zumindest in der Nähe zu der Anschlussstelle (IF) in dem zweiten Abschnitt (SP) erstreckt,
wobei die erste Achse parallel zu der zweiten Achse ist.

2. Gasturbinenbrennerteil (P) nach Anspruch 1,
wobei der sich verjüngende Abschnitt (TP) ein erstes Ende (FE) an der Anschlussstelle (IF) und einen zweiten Bereich (SE) gegenüber dem ersten Ende (FE) aufweist, wobei ein dritter mittlerer Durchmesser (D3) des Kanals (CH) an dem zweiten Bereich (SE) nominell derselbe wie der erste Durchmesser (D1) ist.

3. Gasturbinenbrennerteil (P) nach Anspruch 1 oder 2,
wobei der Kanal (CH) einen runden, ovalen oder elliptischen Querschnitt aufweist.

4. Verfahren zum Herstellen eines Gasturbinenbrennerteils (P) vorzugsweise nach einem der Ansprüche 1 bis 3, das Folgendes aufweist
- einen ersten Abschnitt (FP),
- einen zweiten Abschnitt (SP),
- eine Anschlussstelle (IF), die den ersten Abschnitt (FP) von dem zweiten Abschnitt (SP) abgrenzt,
- einen Kanal (CH), der sich von dem ersten Abschnitt (FP) durch die Anschlussstelle (IF) in den zweiten Abschnitt (SP) erstreckt,
wobei das Verfahren die folgenden Schritte umfasst
1. Bereitstellen des ersten Abschnitts (FP), wobei sich der Kanal (CH) entlang einer ersten mittleren Achse (X1) durch den ersten Abschnitt (FP) erstreckt,
2. Hinzufügen von Material durch additive Fertigung zu der Anschlussstelle (IF), um den zweiten Abschnitt (SP) aufzubauen,
wobei der Kanal (CH) einen ersten mittleren Durchmesser (D1) in dem ersten Abschnitt (FP) an der Anschlussstelle (IF) aufweist,
wobei der Kanal (CH) einen zweiten mittleren Durchmesser (D2) in dem zweiten Abschnitt (SP) an der Anschlussstelle (IF) aufweist,
wobei der zweite Durchmesser (D2) größer als der erste Durchmesser (D1) ist,
wobei der Kanal (CH) entlang eines ersten sich verjüngenden Abschnitts (TP) in dem zweiten Abschnitt (SP) mit steigendem Abstand von der Anschlussstelle (IF) schmaler wird,
wobei sich der Kanal entlang einer zweiten mittleren Achse (X2) zumindest in der Nähe zu der Anschlussstelle (IF) in dem zweiten Abschnitt (SP) erstreckt,
wobei die erste Achse parallel zu der zweiten Achse ist.

5. Verfahren nach Anspruch 4,
wobei der Kanal (CH) in dem zweiten Abschnitt (SP) eine zweite mittlere Achse (X2) durch den ersten Abschnitt (FP) aufweist, wobei die zweite mittlere Achse (X2) einen Versatz (OFF) zu der ersten mittleren Achse (X1) aufweist und der Versatz (OFF) kleiner als (D2 - D1) ist.

## Revendications

1. Pièce (P) de brûleur de turbine à gaz comprenant
- une première partie (FP),
- une deuxième partie (SP),
- une interface (IF), distinguant la première partie (FP) de la partie (SP),
- un canal (CH), s'étendant de la première partie (FP) à la deuxième partie (SP), en traversant l'interface (IF),
dans laquelle la deuxième partie (SP) est faite par une technologie de fabrication additive au dessus de l'interface (IF) de la première partie (FP),
dans laquelle le premier canal (CH) a un premier diamètre (D1) moyen dans la première partie (FP) et dans l'interface (IF),
dans laquelle le canal (CH) a un deuxième diamètre (D2) moyen dans la deuxième partie (SP) à l'interface (IF),
dans laquelle le deuxième diamètre (D2) est plus grand que le premier diamètre (D1),
dans laquelle le canal (CH) devient plus étroit suivant une première partie (TP) conique dans la deuxième partie (SP) au fur et à mesure qu'augmente la distance à l'interface (IF),
dans laquelle le canal (CH) s'étend suivant un premier axe (X1) central, au moins à proximité de l'interface (IF) dans la première partie,
dans laquelle le canal s'étend suivant un deuxième axe (X2) central, au moins à proximité de l'interface (IF) dans la deuxième partie (SP),
dans laquelle le premier axe est parallèle au deuxième axe.

2. Pièce (P) de brûleur de turbine à gaz suivant la revendication 1,
dans laquelle la partie (TP) conique a une première extrémité (FE) à l'interface (IF) et une deuxième partie (SE) opposée à la première extrémité (FE), dans laquelle un troisième diamètre (D3) moyen du canal (CH) à la deuxième partie (SE) est nominalement le même que le premier diamètre (D1).

3. Pièce (P) de brûleur de turbine à gaz suivant la revendication 1 ou 2,
dans laquelle le canal (CH) a une section transversale circulaire, ovale ou elliptique.

4. Procédé de fabrication d'une pièce (P) de brûleur de turbine à gaz, de préférence suivant l'une des revendications 1 à 3,
comprenant
- une première partie (FP),
- une deuxième partie (SP),
- une interface (IF), distinguant la première partie (FP) de la partie (SP),
- un canal (CH), s'étendant de la première partie (FP) à la deuxième partie (SP) en traversant l'interface (IF),
le procédé comprenant les stades suivants
1. on se procure la première partie (FP), le canal (CH) s'étendant suivant un premier axe (X1) central dans la première partie (FP),
2. on ajoute du matériau par fabrication additive à l'interface (IF), afin de constituer la deuxième partie (SP),
dans lequel le premier canal (CH) a un premier diamètre (D1) moyen dans la première partie (FP) à l'interface (IF),
dans lequel le canal (CH) a un deuxième diamètre (D2) moyen dans la deuxième partie (SP) à l'interface (IF), dans lequel le deuxième diamètre (D2) est plus grand que le premier diamètre (D1),
dans lequel le canal (CH), suivant une première partie (TP) conique, devient plus étroit dans la deuxième partie (SP) au fur et à mesure qu'augmente une distance à l'interface (IF),
dans lequel le canal s'étend, suivant un deuxième axe (X2) central, au moins à proximité de l'interface (IF) dans la deuxième partie (SP),
dans lequel le premier axe est parallèle au deuxième axe.

5. Procédé suivant la revendication 4,
dans lequel le canal (CH) dans la deuxième partie (SP) a un deuxième axe (X2) central, traversant la première partie (FP), le deuxième axe (X2) central ayant un décalage (OFF) par rapport au premier axe (X1) central et ce décalage (OFF) est plus petit que (D2 - D1).
